# EUROPEAN PATENT APPLICATION

(11) **EP 4 113 794 A1**
(43) Date of publication of application: **04.01.2023**
(21) Application number: 21760604.5
(22) Date of filing: 18.01.2021
(51) Int. Cl.: H02K 1/27, H02K 7/00, H02K 21/14, H02K 1/14

(54) **MOTOR**

(30) Priority: 27.02.2020 KR 20200024341; 04.03.2020 KR 20200027383
(71) Applicant: LG Innotek Co., Ltd., Seoul 07796 (KR)
(72) Inventor: LEE, Byung Sam, Seoul 07796 (KR); YANG, Jung Soo, Seoul 07796 (KR)
(74) Representative: M. Zardi & Co S.A.
(86) International application number: PCT/KR2021/000650
(87) International publication number: WO 2021/172761

(57) **Abstract**

In an embodiment, disclosed is a motor comprising: a stator; a rotor disposed to correspond to the stator; and a shaft coupled to the rotor, wherein the rotor comprises: a rotor core including a yoke and a plurality of rotor teeth arranged on the yoke so as to spaced apart in the circumferential direction; a plurality of magnets arranged between the rotor teeth; and a can disposed on the rotor core on which the plurality of magnets are arranged, the can includes a first can having a hole and a second can having a protruding part coupled to the hole, and the protruding part is disposed to face the outer surface of the magnet. Therefore, the motor uses the protruding part of the can so as to prevent the separation of the magnets, prevent the leakage of flux, and be implemented to be more compact than a conventional spoke-type motor. In addition, the motor can prevent the leakage of magnetic flux that flows toward the shaft.

## Description

### [Technical Field]

The present invention relates to a rotor and a motor including the same.

### [Background Art]

Motors are apparatuses configured to convert electrical energy to mechanical energy to obtain rotational forces and are widely used for vehicles, home appliances, industrial machines, and the like.

A motor may include a housing, a shaft, a stator disposed on an inner circumferential surface of the housing, a rotor disposed on an outer circumferential surface of the shaft, and the like. In this case, the stator induces an electrical interaction with the rotor to induce rotation of the rotor.

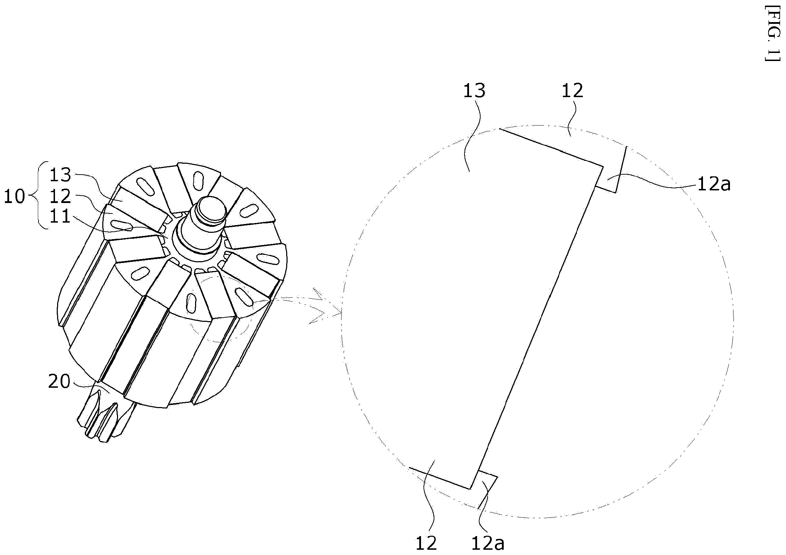

FIG. 1 is a view illustrating a rotor and a shaft of a conventional spoke type motor.

Referring to FIG. 1, the conventional spoke type motor may include a rotor 10 and a shaft 20 coupled to the rotor 10.

The rotor 10 includes a rotor yoke 11 and a plurality of rotor teeth 12, and magnets 13 are disposed between the rotor teeth 12. In this case, the magnets 13 are disposed to extend radially on the rotor 10 when viewed from above. In the case of such a spoke type motor, it is characterized by having high output power. In this case, each of the magnets 13 is formed in a shape in which a length in a radial direction is greater than a width.

Referring to FIG. 1, the magnet 13 may be formed in a long bar shape. In this case, the conventional spoke type motor may include protrusions 12a formed on the rotor teeth 12 to prevent separation of the magnets 13.

However, there is a problem of a flux leakage due to the protrusions 12a.

In addition, there is a problem that the protrusions 12a can prevent the separation of the magnets 13 only in the radial direction and cannot prevent the separation of the magnets 13 in an axial direction.

Accordingly, the rotor of the conventional spoke type motor may further include a can or over molding structure to prevent the separation of the magnets 13 in the axial direction while assisting the protrusions 12a.

However, in the can or over molding structure using a mold part, an air gap between the rotor 10 and a stator increases in the radial direction, and thus there is a problem of an in increase in size of the motor. Otherwise, when a size of a motor is fixed, the can or over molding structure has a problem of air gap loss.

Accordingly, a motor capable of preventing not only a flux leakage occurring due to the protrusions 12a but also an increase in air gap is required.

### [Technical Problem]

The present invention is directed to providing a motor which prevents a leakage of a flux and separation of a magnet and is compact in a radial direction.

The present invention is directed to providing a motor capable of preventing a leakage of a magnetic flux of a magnet.

Objectives to be solved by the present invention are not limited to the above-described objectives, and other objectives, which are not described above, will be clearly understood by those skilled in the art from the following description.

### [Technical Solution]

One aspect of the present invention provides a motor including a stator, a rotor disposed to correspond to the stator, and a shaft coupled to the rotor, wherein the rotor includes a rotor core including a yoke and a plurality of rotor teeth disposed apart from each other on the yoke in a circumferential direction, a plurality of magnets disposed between the rotor teeth, and a can disposed outside the rotor core, the can includes a first can in which a hole is formed and a second can including a protruding part coupled to the hole, and a part of the protruding part is disposed to face an outer surface of each of the magnets.

A radius (R1) of each of the rotor teeth may be greater than radius (R6) of the protruding part. In this case, the radius (R6) of the protruding part may be a distance from an outer surface of the protruding part to a center (C) of the shaft.

An outer radius (R3) of the first can may be smaller than or equal to the radius (R1) of the rotor tooth or greater than a radius (R2) of the magnet. In this case, the radius (R2) of the magnet may be a distance from the center (C) of the shaft to the outer surface of the magnet.

The first can may be formed in a ring shape, and the radius (R2) of the magnet may be smaller than the outer radius (R3) of the first can and greater than an inner radius (R4) of the first can.

The first can may be formed in a ring shape, and the first can may be disposed to overlap a part of the magnet in an axial direction.

The stator may include a stator core and a coil wound around the stator core, the stator core may include a plurality of teeth disposed apart from each other in the circumferential direction, and a distance (D1) from an inner circumferential surface of each of the teeth to an outer surface of the rotor tooth may be smaller than a distance (D2) from the inner circumferential surface of the tooth to the protruding part.

Another aspect of the present invention provides a rotor including a rotor core which includes a yoke and a plurality of rotor teeth disposed apart from each other on the yoke in a circumferential direction, a plurality of magnets disposed between the rotor teeth, and a can disposed on the rotor core on which the plurality of magnets are disposed, wherein the can includes a first can in which a hole is formed and a second can including a body and a protruding part extending from the body in an axial direction, the protruding part coupled to the hole is disposed to face an outer surface of the magnet.

A length of the protruding part may be greater than a length of the rotor core in the axial direction, and an end portion of the protruding part coupled to the hole may be bent.

Still another aspect of the present invention provides a motor including a shaft, a rotor disposed outside the shaft, and a stator disposed outside the rotor, wherein the rotor includes a plurality of rotor teeth, a magnet disposed between the plurality of rotor teeth in a circumferential direction, and a first member disposed between the shaft and the rotor teeth in a radial direction, the first member is formed of a non-magnetic material, and a part of each of the rotor teeth and a part of the first member are disposed to overlap in the circumferential direction.

Yet another aspect of the present invention provides a motor including a shaft, a rotor disposed outside the shaft, and a stator disposed outside the rotor, wherein the rotor includes a rotor tooth, a magnet in contact with the rotor tooth, and a first member disposed between the shaft and the rotor tooth in a radial direction and formed of a not-magnetic material, the first member includes an outer circumferential surface in contact with the magnet, an inner circumferential surface in contact with the shaft, and a first groove and a second groove which are disposed between the outer circumferential surface and the inner circumferential surface in the radial direction and communicate with each other, the second groove is disposed to be closer to the inner circumferential surface than the first groove in the radial direction, a width of the second groove in a circumferential direction is greater than a width of the first groove in the circumferential direction, and a part of the rotor tooth is disposed in the first groove and the second groove.

The first member may include a first groove and a second groove which communicate with each other, the second groove may be disposed to be closer to an inner circumferential surface than the first groove in the radial direction, a width of the second groove in the circumferential direction may be greater than a width of the first groove in the circumferential direction, and a part of the rotor tooth may be disposed in the first groove and the second groove.

The rotor tooth may include a first protrusion protruding toward the shaft, the second groove may include a first surface and a second surface disposed in opposite directions, and at least any one of the first surface and the second surface may be in contact with the first protrusion in an axial direction.

The rotor tooth may include a first protrusion protruding toward the shaft, the second groove may include a first surface and a second surface disposed in opposite directions in the radial direction, and at least any one of the first surface and the second surface may include a first region in contact with the first protrusion and a second region which is not in contact with the first protrusion.

The second groove may include a first surface and a second surface disposed in opposite directions in the radial or diagonal direction, and at least any one of the first surface and the second surface may include a plurality of second protrusions.

A part of the first protrusion may be in contact with the second protrusions disposed on the second surface, and another part of the first protrusion may be in surface contact with the first surface.

An inner surface of a plurality of surfaces of the magnet may be disposed toward the shaft, a part of the inner surface may be in contact with an outer circumferential surface of the first member, and the other part of the inner surface may be disposed apart from the outer circumferential surface of the first member.

The magnet and the first member may be in line contact with each other in an axial direction.

The rotor tooth may include a first protrusion protruding toward the shaft, the first protrusion may include a 1-1 protrusion and a 1-2 protrusion protruding from the 1-1 protrusion, and a width of the 1-2 protrusion in the circumferential direction may be greater than a width of the 1-1 protrusion in the circumferential direction.

### [Advantageous Effects]

According to embodiments, the present invention can prevent separation of a magnet using a protruding part of a can disposed to face an outer circumferential surface of the magnet.

In addition, according to the embodiments, since a protrusion formed on a rotor tooth of a conventional spoke type motor can be omitted using the protruding part of the can, a flux leakage due to the conventional protrusion can be prevented.

In addition, since the protruding part is disposed further inward than an outer circumferential surface of a rotor core in a radial direction, a motor having a smaller size than the conventional spoke type motor in the radial direction can be implemented.

That is, according to the embodiments, the motor which prevents separation of the magnet and a leakage of a flux and is more compact than the conventional spoke type motor in the radial direction can be implemented.

According to the embodiments, the present invention provides an advantageous effect of preventing a leakage of a magnetic flux flowing toward a shaft.

According to the embodiments, there are advantages that assembly of the rotor tooth is easy, and movement of the rotor tooth is prevented after the rotor tooth is assembled.

Various useful advantages and effects of the embodiments are not limited to the above-described contents and will be more easily understood from descriptions of the specific embodiments.

### [Description of Drawings]

FIG. 1 is a view illustrating a rotor and a shaft of a conventional spoke type motor.
FIG. 2 is a view illustrating a motor according to an embodiment.
FIG. 3 is a cross-sectional view along line A-A of FIG. 2.
FIG. 4 is a bottom perspective view illustrating a state in which a rotor and a shaft according to a first embodiment disposed in the motor according to the embodiment are coupled.
FIG. 5 is a perspective view illustrating the rotor according to the first embodiment disposed in the motor according to the embodiment.
FIG. 6 is a plan view illustrating the rotor according to the first embodiment disposed in the motor according to the embodiment.
FIG. 7 is a bottom view illustrating the rotor according to the first embodiment disposed in the motor according to the embodiment.
FIG. 8 is a plan view illustrating an arrangement relationship between a rotor core and magnets of the rotor according to the first embodiment.
FIG. 9 is a set of views illustrating a process in which a can is disposed on a rotor assembly of the rotor according to the first embodiment.
FIG. 10 is a view illustrating a first can of the motor according to the embodiment.
FIG. 11 is a view illustrating a second can of the motor according to the embodiment.
FIG. 12 is a view illustrating a rotor according to a second embodiment.
FIG. 13 is a plan view illustrating a rotor tooth of the rotor according to the second embodiment.
FIG. 14 is a plan view illustrating a first member of the rotor according to the second embodiment.
FIG. 15 is a plan view illustrating a first groove and a second groove of the first member of the rotor according to the second embodiment.
FIG. 16 is a view illustrating a modified example of the second groove of the first member of the rotor according to the second embodiment.
FIG. 17 is a view illustrating anther modified example of the second groove of the first member of the rotor according to the second embodiment.
FIG. 18 is a view illustrating a state in which a first protrusion of a rotor core is coupled to the first groove and the second groove of the first member of the rotor according to the second embodiment.
FIG. 19 is a view illustrating a state in which a magnet and the first member of the rotor according to the second embodiment are in contact with each other.

### [Modes of the Invention]

Hereinafter, exemplary embodiments of the present invention will be described in detail with reference the accompanying drawings.

However, the technical spirit of the present invention is not limited to some embodiments which will be described and may be embodied in a variety of different forms, and at least one or more components of the embodiments may be selectively combined, substituted, and used within the range of the technical spirit.

In addition, unless clearly and specifically defined otherwise by the context, all terms (including technical and scientific terms) used herein can be interpreted as having meanings customarily understood by those skilled in the art, and meanings of generally used terms, such as those defined in commonly used dictionaries, will be interpreted in consideration of contextual meanings of the related art.

In addition, the terms used in the embodiments of the present invention are considered in a descriptive sense only and not to limit the present invention.

In the present specification, unless clearly indicated otherwise by the context, singular forms include the plural forms thereof, and in a case in which "at least one (or one or more) among A, B, and C" is described, this may include at least one combination among all possible combinations of A, B, and C.

In addition, in descriptions of components of the present invention, terms such as "first," "second," "A," "B," "(a)," and "(b)" can be used.

The terms are only to distinguish one element from another element, and the essence, order, and the like of the elements are not limited by the terms.

In addition, it should be understood that, when an element is referred to as being "connected" or "coupled" to another element, such a description may include both a case in which the element is directly connected or coupled to another element, and a case in which the element is connected or coupled to another element with still another element disposed therebetween.

In addition, when any one element is described as being formed or disposed "on" or "under" another element, such a description includes both a case in which the two elements are formed or disposed in direct contact with each other and a case in which one or more other elements are interposed between the two elements. In addition, when one element is described as being formed "on or under" another element, such a description may include a case in which the one element is formed at an upper side or a lower side with respect to another element.

Hereinafter, in the detailed description of the example embodiments of the invention with reference to the accompanying drawings, components that are the same or correspond to each other will be denoted by the same reference numerals in all of the figures, and redundant descriptions will be omitted.

### First embodiment

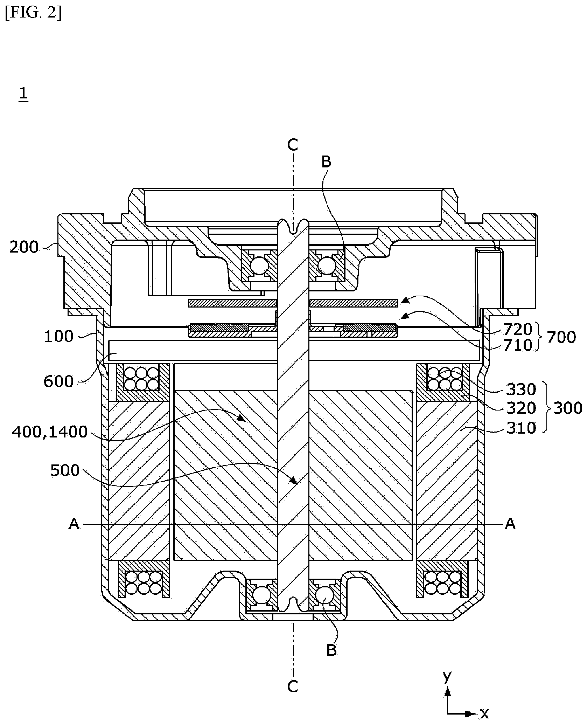

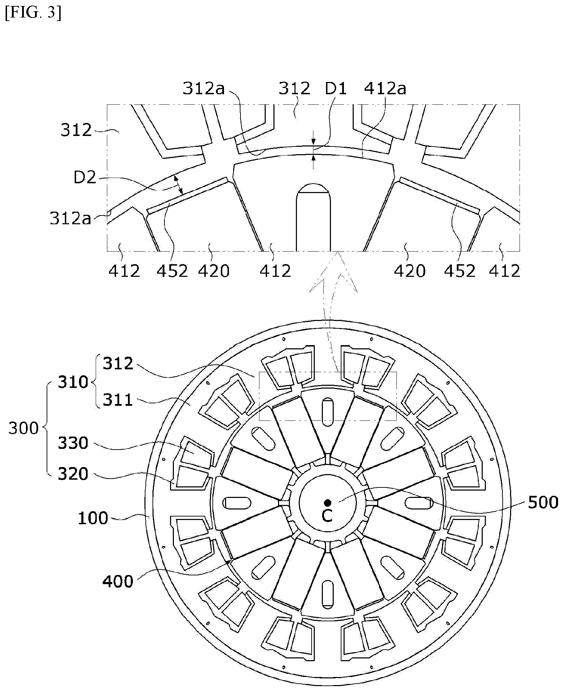

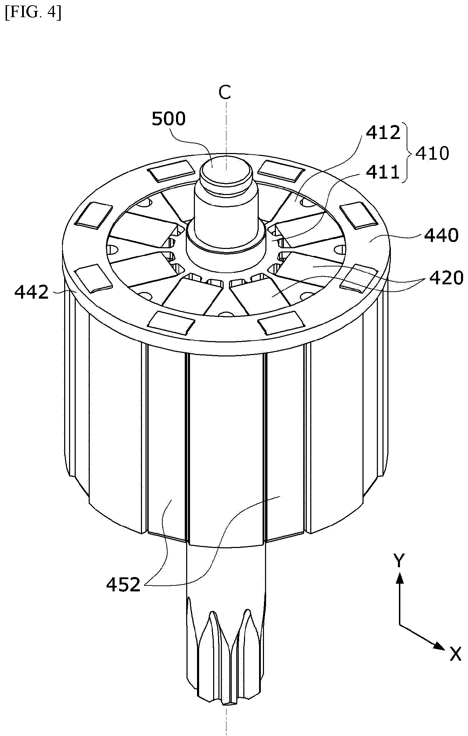

FIG. 2 is a view illustrating a motor according to an embodiment, FIG. 3 is a cross-sectional view along line A-A of FIG. 2, and FIG. 4 is a bottom perspective view illustrating a state in which a rotor and a shaft according to a first embodiment disposed in the motor according to the embodiment are coupled. In FIG. 2, an x direction may be a radial direction, and a y direction may be an axial direction. In addition, the axial direction and the radial direction may be perpendicular to each other. In this case, the axial direction may be a longitudinal direction of a shaft 500.

Referring to FIGS. 2 and 3, a motor 1 according to the embodiment may include a housing 100 having one side at which an opening is formed, a cover 200 disposed on the housing 100, a stator 300 disposed in the housing 100, a rotor 400 disposed inside the stator 300, and the shaft 500 coupled to the rotor 400. In addition, the motor 1 may include a busbar 600 disposed above the stator 300 and a sensor part 700 which detects rotation of the rotor 400. In this case, as illustrated in FIG. 4, the rotor 400 coupled to the shaft 500 may be referred to as a shaft assembly. In addition, the term "inward" may be a direction toward a rotation center C of the motor 1 in the radial direction, and the term "outward" may be a direction opposite to "inward." In addition, the rotation center C of the motor 1 may be an axial center of the shaft 500.

The housing 100 and the cover 200 may form an exterior of the motor 1. In addition, an accommodation space may be formed by coupling the housing 100 and the cover 200. Accordingly, as illustrated in FIG. 2, the stator 300, the rotor 400, the shaft 500, the busbar 600, the sensor part 700, and the like may be disposed in the accommodation space.

In this case, the shaft 500 is rotatably disposed in the accommodation space. Accordingly, the motor 1 may further include bearings B disposed on upper and lower portions of the shaft 500. In this case, the bearing B disposed in the housing 100 may be referred to as a first bearing or lower bearing, and the bearing B disposed in the cover 200 may be referred to as a second bearing or upper bearing.

The housing 100 may be formed in a cylindrical shape. In addition, the housing 100 may accommodate the stator 300, the rotor 400, and the like therein. In this case, a shape or material of the housing 100 may be variously changed. For example, the housing 100 may be formed of a metal material which firmly withstands even high temperatures.

The housing 100 may include a pocket part for accommodating the bearing B in a lower portion. In this case, the pocket part of the housing 100 may be referred to as a housing pocket part.

The cover 200 may be disposed on an open surface of the housing 100, that is, an upper portion of the housing 100, to cover the opening of the housing 100.

In addition, the cover 200 may include a pocket part for accommodating the bearing B. In this case, the pocket part of the cover 200 may be referred to as a cover pocket part.

The stator 300 induces an electrical interaction with the rotor 400 to induce rotation of the rotor 400.

The stator 300 may be disposed inside the housing 100. In this case, the stator 300 may be supported by an inner circumferential surface of the housing 100. In addition, the stator 300 may be disposed outside the rotor 400. That is, the rotor 400 may be rotatably disposed inside the stator 300.

Referring to FIG. 3, the stator 300 may include a stator core 310, insulators 320 disposed on the stator core 310, and coils 330 wound around the insulators 320.

The coils 330 which generate a rotating magnetic field may be wound around the stator core 310. In this case, the stator core 310 may be formed as a single core or formed by coupling a plurality of divided cores.

The stator core 310 may be formed in a form in which a plurality of thin steel plates are stacked but is not necessarily limited thereto. For example, the stator core 310 may also be formed as one single part.

The stator core 310 may include a yoke 311 having a cylindrical shape and a plurality of teeth 312 protruding from the yoke 311 in a radial direction. In this case, the yoke 311 may be referred to as a stator yoke. In addition, the teeth 312 may be referred to as stator teeth.

The plurality of teeth 312 may be disposed apart from each other in a circumferential direction of the yoke 311. Accordingly, slots in which the coils 330 are wound around the teeth 312 may be formed between the teeth 312.

Meanwhile, the teeth 312 of the stator 300 may be disposed to have an air gap between the teeth 312 and the rotor 400. In this case, the air gap may be a distance from an inner circumferential surface 312a of each of the teeth 312 to an outer circumferential surface of the rotor 400. Specifically, the air gap may be a shortest distance from the inner circumferential surface 312a of the tooth 312 to an outer surface 412a of a rotor tooth 412 of the rotor 400 in the radial direction.

The insulators 320 insulate the stator core 310 from the coils 330. Accordingly, the insulators 320 may be disposed between the stator core 310 and the coils 330.

Accordingly, the coils 330 may be wound around the stator core 310 on which the insulators 320 are disposed.

The rotor 400 rotates due to an electrical interaction with the stator 300. In this case, the rotor 400 may be rotatably disposed inside the stator 300.

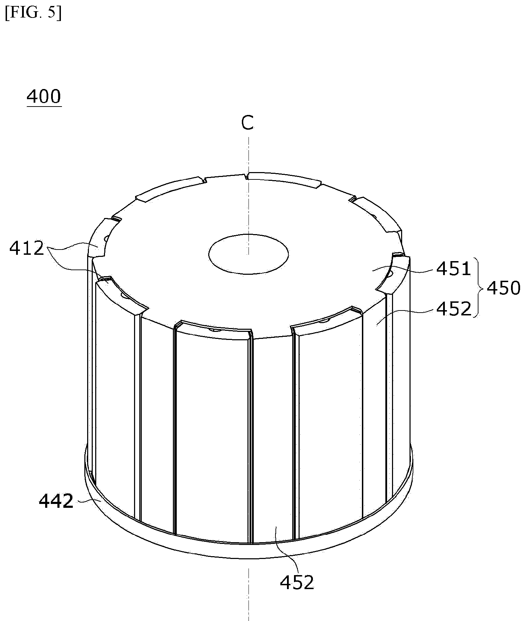

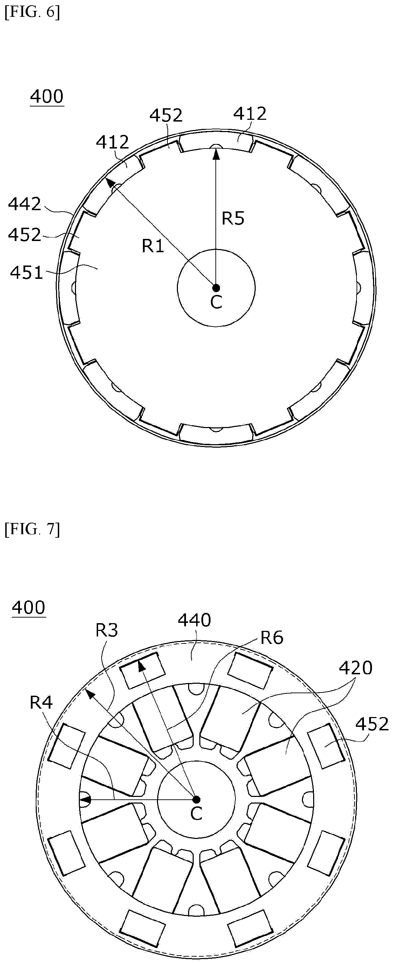

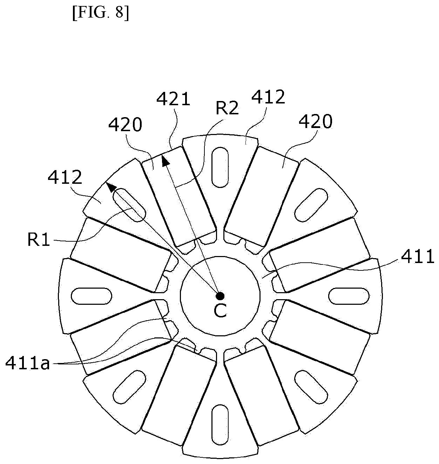

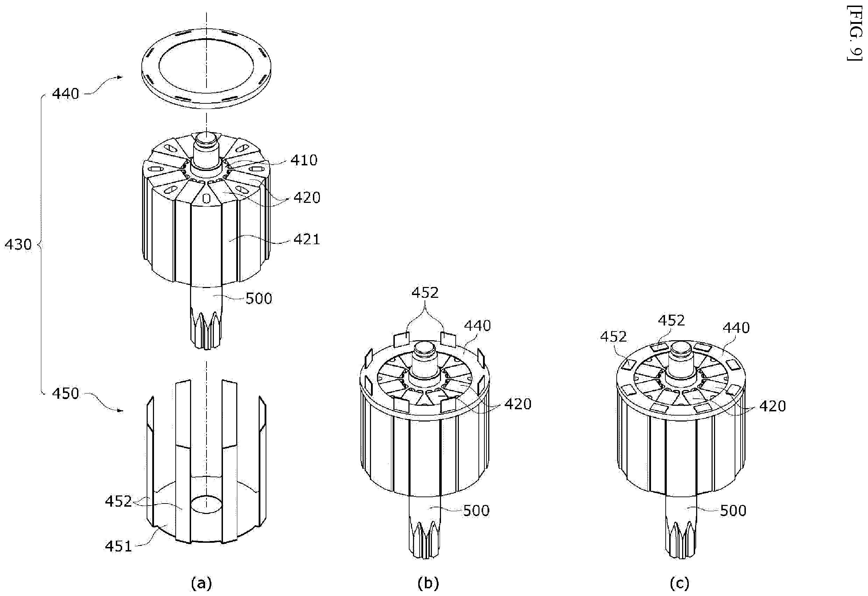

FIG. 5 is a perspective view illustrating the rotor according to the first embodiment disposed in the motor according to the embodiment, FIG. 6 is a plan view illustrating the rotor according to the first embodiment disposed in the motor according to the embodiment, FIG. 7 is a bottom view illustrating the rotor according to the first embodiment disposed in the motor according to the embodiment, FIG. 8 is a plan view illustrating an arrangement relationship between the rotor core and magnets of the rotor according to the first embodiment, and FIG. 9 is a set of views illustrating a process in which a can is disposed on a rotor assembly of the rotor according to the first embodiment.

Referring to FIGS. 5 to 9, the rotor 400 may include a rotor core 410, a plurality of magnets 420 disposed on the rotor core 410, and a can 430 disposed on the rotor core 410 coupled to the magnets 420. In this case, the magnets 420 may be radially disposed on the rotor core 410 based on a center C. In this case, the rotor 400 may be the rotor according to the first embodiment and may be referred to as a first rotor.

The rotor core 410 may be formed in a form in which a plurality of thin steel plates are stacked or formed in one container form. In addition, a hole coupled to the shaft 500 may be formed at the center C of the rotor core 410.

The rotor core 410 may include a yoke 411 and a plurality of rotor teeth 412 disposed apart from each other on the yoke 411 in a circumferential direction.

The yoke 411 may be formed in a cylindrical shape having a central portion in which a hole is formed to be coupled to the shaft 500. As illustrated in FIG. 8, the yoke 411 may include protrusions 411a disposed to face one inner surfaces of the magnets 420. In this case, the protrusions 411a may be disposed between the rotor teeth 412 in the circumferential direction. In addition, an end portion of each of the protrusions 411a may be in contact with one inner surface of one of the magnets 420.

The rotor teeth 412 may be formed to protrude from an outer circumferential surface of the yoke 411 in the radial direction. In this case, the plurality of rotor teeth 412 may be disposed apart from each other in the circumferential direction.

That is, the plurality of rotor teeth 412 may be radially disposed based on the center C of the rotor 400. In this case, since the rotor teeth 412 may be formed apart from each other in the circumferential direction, open portions may be formed. Accordingly, spaces in which the magnets 420 are disposed may be formed between the rotor teeth 412 in the circumferential direction. In addition, an outer side, which is one side, of the magnet 420 may be open (exposed).

In addition, the rotor tooth 412 may be disposed to have a predetermined radius R1 based on the center C of the rotor 400. For example, the plurality of rotor teeth 412 may be disposed on the predetermined radius R1. In this case, the radius R1 may be referred to as a first radius and a distance from the center C to the outer surface 412a of the rotor tooth 412.

In addition, the outer surface 412a of the rotor tooth 412 may be disposed to have a predetermined distance D1 to the inner circumferential surface 312a of the tooth 312 of the stator 300. In this case, the distance D1 may be referred to as a first distance.

The plurality of magnets 420 may be disposed between the rotor teeth 412. In this case, each of the magnets 420 may be formed in a long bar shape.

Each of the magnets 420 may be disposed to have a predetermined radius R2 based on the center C of the rotor 400. For example, the plurality of magnets 420 may be disposed on the predetermined radius R2. In this case, the radius R2 may be referred to as a second radius and may be a distance from the center C to an outer surface 421 of the magnet 420. In this case, the radius R2 of the magnet 420 may be the distance from the center C of the shaft 500 to the outer surface 421 of the magnet 420 in the radial direction. In addition, the radius R2 of the magnet 420 is smaller than the radius R1 of the rotor tooth 412.

The magnets 420 generate a rotating magnetic field with the coils 330 wound around the stator core 310 of the stator 300.

Accordingly, due to an electrical interaction between the coils 330 and the magnets 420, the rotor 400 rotates, and the shaft 500 rotates in conjunction with the rotation of the rotor 400 so that a driving force of the motor 1 is generated.

The can 430 may be disposed to cover a part of the rotor core 410 to which the magnets 420 are attached. In this case, the rotor core 410 to which the magnets 420 are attached may be referred to as a rotor assembly.

The can 430 may protect the rotor core 410 and the magnets 420 from physical or chemical stimulus. In addition, the can 430 may prevent the magnets 420 from being separated from the rotor core 410.

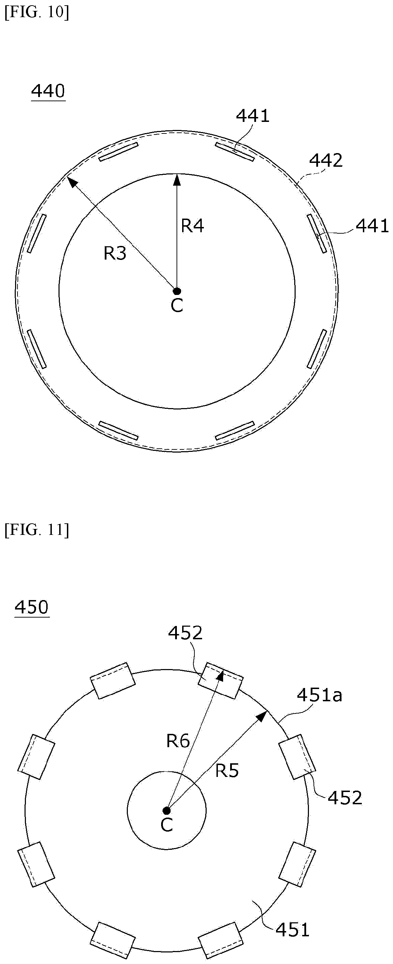

FIG. 10 is a view illustrating a first can of the motor according to the embodiment, and FIG. 11 is a view illustrating a second can of the motor according to the embodiment.

Referring to FIGS. 5 to 11, the can 430 may include a first can 440 and a second can 450 coupled to the first can 440.

The first can 440 may be disposed in contact with a lower portion of the rotor core 410. In addition, a part of the second can 450 may be disposed in contact with an upper portion of the rotor core 410, and another portion of the second can 450 may be disposed outside the magnets 420. Accordingly, the first can 440 and the second can 450 may prevent the magnets 420 from being separated in an axial direction. In this case, an example of the first can 440 disposed under the rotor core 410 and an example of a part of the second can 450 disposed above the rotor core 410 are described, but the present invention is not necessarily limited thereto. For example, the first can 440 may be disposed above the rotor core 410, and a part of the second can 450 may also be disposed under the rotor core 410.

The first can 440 may include a plurality of holes 441 disposed apart from each other in the circumferential direction. The holes 441 may be formed in a shape passing through the first can 440 in the axial direction and formed in a shape corresponding to protruding parts 452 of the second can 450 in consideration of coupling with the protruding parts 452 of the second can 450.

In this case, the first can 440 may be formed as a plate having a ring shape. Accordingly, the first can 440 may be disposed to overlap a part of the magnet 420 in the axial direction. In this case, the first can 440 may be disposed in contact with a lower surface of the rotor core 410.

In addition, since the first can 440 is formed as the plate having the ring shape, the first can 440 may have an outer radius R3 and an inner radius R4. In this case, the outer radius R3 may be referred to as a third radius, and the inner radius R4 may be referred to as a fourth radius.

The outer radius R3 of the first can 440 may be smaller than or equal to the radius R1 of the rotor tooth 412. In this case, the outer radius R3 of the first can 440 may be greater than the radius R2 of the magnet 420. In addition, the inner radius R4 may be smaller than the radius R2 of the magnet 420. That is, the radius R2 of the magnet may be smaller than the outer radius R3 of the first can 440 and greater than the inner radius R4 of the first can 440.

Meanwhile, the first can 440 may further include a rim 442 extending to protrude upward from an outer circumferential surface in the axial direction. In this case, a cross-section of the rim 442 may be formed in a ring shape. In addition, the rim 442 may be referred to as a sleeve.

The rim 442 may be disposed outside of the rotor tooth 412.

As illustrated in FIG. 6, an inner circumferential surface of the rim 442 may be disposed in contact with the outer surface 412a of the rotor tooth 412. In addition, the inner circumferential surface of the rim 442 may be disposed apart from the protruding parts 452. In this case, the rim 442 is an additional component of the first can 440 and may serve as a guide for arranging the first can 440 on the rotor assembly.

The second can 450 may include a body 451 and at least two protruding parts 452 protruding from the body 451 in the axial direction. That is, the second can 450 may include the body 451 and the plurality of protruding parts 452 protruding from the body 451 in the axial direction. In this case, the body 451 and the protruding parts 452 may be integrally formed. For example, the body 451 and the protruding parts 452 of the second can 450 may be formed by cutting and bending a material having a plate shape.

The body 451 may be formed in a disc shape having a predetermined thickness. In addition, a hole in which the shaft 500 is disposed may be formed in a central portion of the body 451. In this case, one surface of the body 451 may be disposed in contact with an upper surface of the rotor core 410. In addition, a radius of the hole formed in the body 451 may be smaller than the inner radius R4 of the first can 440.

In addition, an outer circumferential surface 451a of the body 451 may be formed to have a predetermined radius R5. In this case, the radius R5 may be referred to as a fifth radius. In addition, the radius R5 of the outer circumferential surface 451a may be smaller than the radius R1 of the rotor tooth 412. In addition, the radius R5 of the outer circumferential surface 451a may be greater than the radius R2 of the magnet 420.

The protruding parts 452 may be formed to protrude from the body 451 in the axial direction. In addition, the protruding parts 452 may be coupled to the holes 441 of the first can 440 and bent to prevent the magnets 420 from being separated in the axial direction. In this case, the protruding parts 452 may be formed in a plate shape.

In addition, the plurality of protruding parts 452 may be disposed apart from each other at predetermined intervals on the body 451 in the circumferential direction.

In addition, each of the protruding parts 452 may be formed to face one of the magnets 420. Specifically, a part of the protruding part 452 may be disposed to overlap the magnet 420 in the radial direction. In this case, the protruding part 452 may be disposed outside the magnet 420. Accordingly, the protruding part 452 may prevent the magnet 420 from being separated in the radial direction. In this case, the number of the protruding parts 452 and the number of the magnets 420 are the same.

Referring to FIGS. 9 and 11, the protruding part 452 may extend from the outer circumferential surface 451a of the body 451 in the axial direction. In this case, the protruding part 452 may be disposed to have a predetermined radius R6 based on the center C of the rotor 400. For example, the plurality of protruding parts 452 may be disposed on the predetermined radius R6. Accordingly, a distance from an outer surface of the protruding part 452 to the center C of the shaft 500 may be greater than the radius R5 of the outer circumferential surface 451a. That is, the radius R6 of the protruding part 452 may be greater than the radius R5 of the outer circumferential surface 451a. In this case, the radius R6 of the protruding part 452 may be a radius of the outer surface of the protruding part 452 and may be referred to as a sixth radius.

In addition, the radius R1 of the outer surface of the rotor tooth may be greater than the distance from the outer surface of the protruding part 452 to the center C of the axial center of the shaft 500. Accordingly, even when the can 430 of the rotor 400 is used, a compact motor can be implemented.

Meanwhile, a length of the protruding part 452 may be greater than a length of the rotor core 410 in the axial direction. Accordingly, the protruding part 452 may be coupled to the hole 441 and bent to fix the first can 440.

Meanwhile, the outer surface 412a of the rotor tooth 412 may be disposed to have the predetermined distance D1 to the inner circumferential surface 312a of the tooth 312 of the stator 300. In this case, the distance D1 may be referred to as a first distance.

In addition, the protruding part 452 may be disposed to have a predetermined distance D2 to the inner circumferential surface 312a of the tooth 312 of the stator 300. In this case, the distance D2 may be referred to as a second distance.

Accordingly, in the motor 1, since the distance D1 from the inner circumferential surface 312a of the tooth 312 to the outer surface 412a of the rotor tooth 412 is smaller than the distance D2 from the inner circumferential surface 312a of the tooth 312 to the protruding part 452, a loss of the air gap can be prevented. Accordingly, the motor 1 may be implemented as a compact motor in the radial direction.

Referring to FIG. 9, a process in which the can 430 is coupled to the rotor assembly will be described.

As illustrated in FIG. 9A, the first can 440 and the second can 450 may be coupled to an upper portion and a lower portion of the rotor assembly. In this case, the protruding parts 452 of the second can 450 may be disposed outside the magnets 420 to face the magnets 420.

As illustrated in FIG. 9B, the protruding part 452 of the second can 450 may pass through and coupled to the hole 441 of the first can 440. In this case, since the length of the protruding part 452 may be greater than the length of the rotor core 410 in the axial direction, an end portion of the protruding part 452 coupled to the hole 441 may be disposed to be exposed from the first can 440.

As illustrated in FIG. 9C, the end portion of the protruding part 452 passing through the hole 441 may be bent to fix the first can 440.

Accordingly, in the motor 1, through the process illustrated in FIGS. 9A, 9B, and 9C, the can 430 can be fixedly coupled to the rotor assembly. Accordingly, separation of the magnet 420 can be prevented by the can 430.

The shaft 500 may be disposed in the housing 100 to be rotatable due to the bearing B. In addition, the shaft 500 may rotate in conjunction with rotation of the rotor 400.

In addition, the shaft 500 may be coupled to the hole formed in a central portion of the rotor core 410 in a press-fit manner.

The busbar 600 may be disposed above the stator 300.

In addition, the busbar 600 may be electrically connected to the coils 330 of the stator 300.

The busbar 600 may include a busbar body (not shown) and a plurality of terminals (not shown) disposed in the busbar body. In this case, the busbar body may be a molded part formed in an injection molding manner. In addition, each of the terminals may be electrically connected to one of the coils 330 of the stator 300.

The sensor part 700 may detect a current position of the rotor 400 by detecting a magnetic force of sensing magnets installed to operate in conjunction with rotation of the rotor 400 to detect rotation of the shaft 500.

The sensor part 700 may include a sensing magnet assembly 710 and a printed circuit board (PCB) 720.

The sensing magnet assembly 710 is coupled to the shaft 500 to operate in conjunction with the rotor 400 to detect a position of the rotor 400. In this case, the sensing magnet assembly 710 may include the sensing magnets and a sensing plate.

The sensing magnets may include main magnets disposed adjacent to a hole forming an inner circumferential surface thereof in the circumferential direction and sub-magnets formed at an edge thereof.

The main magnets may be arranged in the same way as the drive magnets inserted into the rotor 400 of the motor.

The sub-magnets may be subdivided further than the main magnets so that the sub-magnets have many poles. Accordingly, a rotation angle may be subdivided and measured more precisely due to the sub-magnets, and thus the motor may be driven more smoothly.

The sensing plate may be formed of a disc type metal material. The sensing magnets may be coupled to an upper surface of the sensing plate. In addition, the sensing plate may be coupled to the shaft 500. In this case, a hole through which the shaft 500 passes may be formed in the sensing plate.

A sensor which detects a magnetic force of the sensing magnets may be disposed on the PCB 720. In this case, the sensor may be provided as a Hall integrated circuit (IC). In addition, the sensor may detect changes in an N-pole and an S-pole of the sensing magnets and generate a sensing signal. Accordingly, the PCB 720 on which the Hall IC is disposed may be referred to as a sensing assembly or position detection device.

### Second embodiment

A motor 1 according to an embodiment may include a housing 100 having one side at which an opening is formed, a cover 200 disposed on the housing 100, a stator 300 disposed in the housing 100, a rotor 1400 disposed inside the stator 300, and the shaft 500 coupled to the rotor 400. In addition, the motor 1 may include a busbar 600 disposed above the stator 300 and a sensor part 700 which detects rotation of the rotor 400. In this case, the rotor 1400 may be a rotor according to the second embodiment and may be referred to as a second rotor. That is, the motor 1 may include the rotor 1400 according to the second embodiment instead of the rotor 400 according to the first embodiment.

The rotor 1400 may be disposed outside the shaft 500. The rotor 1400 rotates due to an electrical interaction with the stator 300.

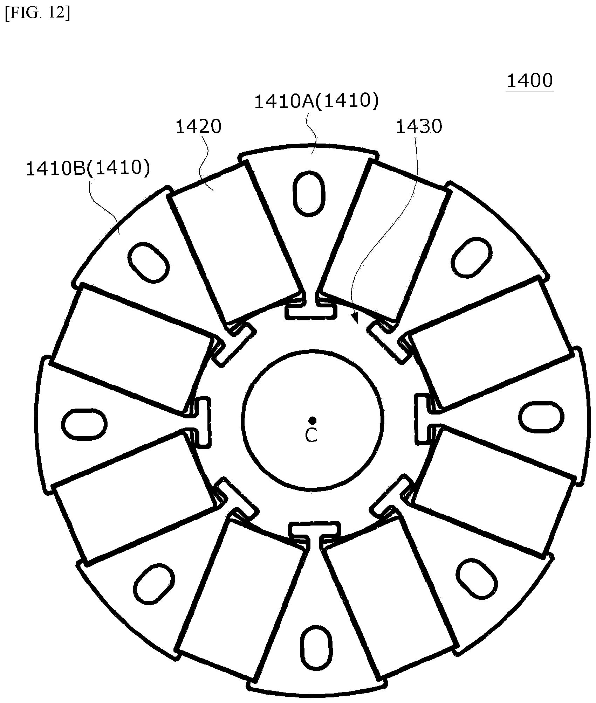

FIG. 12 is a view illustrating the rotor 1400.

Referring to FIG. 12, the rotor 1400 may include rotor teeth 1410, magnets 1420, and a first member 1430. In this case, the rotor teeth 1410 and the first member 1430 may be coupled to form a rotor core. In this case, the magnets 1420 may be radially disposed on the rotor core based on a center C.

The plurality of rotor teeth 1410 may be provided. The plurality of rotor teeth 1410 are disposed apart from each other in a circumferential direction. The plurality of rotor teeth 1410 may be formed by stacking a plurality of plates. Alternatively, each of the plurality of rotor teeth 1410 may be formed as a single member. Based on one rotor tooth 1410, the magnets 1420 may be disposed at two sides of the rotor tooth 1410.

Each of the magnets 1420 may be disposed between a rotor tooth 1410A and a rotor tooth 1410B which are adjacent to each other in the circumferential direction. That is, the magnet 1420 may be disposed between two rotor teeth 1410 in the circumferential direction.

The first member 1430 is disposed inside the magnets 1420 and coupled to the rotor teeth 1410. In addition, the first member 1430 is coupled to the shaft 500. In a radial direction, the rotor teeth 1410 are positioned outside the first member 1430, and the shaft 500 is positioned inside the first member 1430. The first member 1430 is formed of a non-magnetic member. This is to prevent a leakage of a magnetic flux leaking to the shaft 500 through the rotor teeth 1410. In this case, the first member 1430 may be referred to as a yoke. In addition, the first member 1430 may be formed of a different material from the rotor teeth 1410. For example, the first member 1430 may be formed of a synthetic resin material which is one of non-magnetic materials.

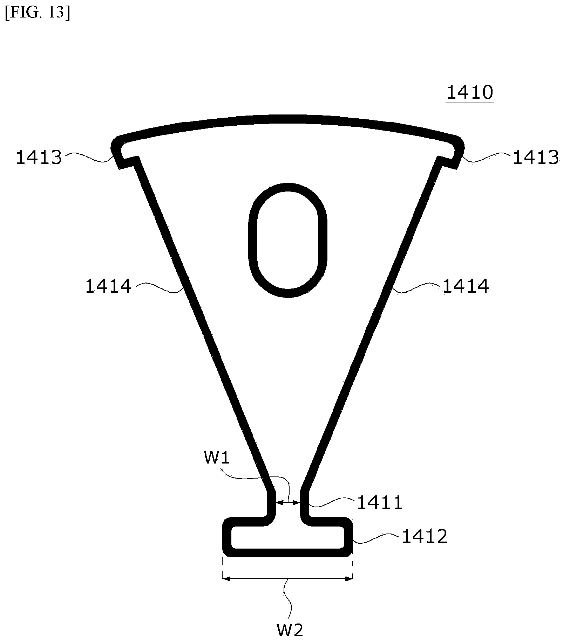

FIG. 13 is a plan view illustrating the rotor tooth 1410.

Referring to FIG. 13, the rotor tooth 1410 may include first protrusions 1411 and 1412 protruding inward. In addition, the rotor tooth 1410 may include side surfaces 1414. The first protrusions 1411 and 1412 are for coupling with the first member 1430. In addition, the side surfaces 1414 are for fixing the magnets 1420 by being in contact with the magnets 1420.

The first protrusions 1411 and 1412 may include a 1-1 protrusion 1411 and a 1-2 protrusion 1412.

The 1-1 protrusion 1411 is connected to the side surfaces 1414.

The 1-2 protrusion 1412 protrudes inward from the 1-1 protrusion 1411. A width W2 of the 1-2 protrusion 1412 is greater than a width W1 of the 1-1 protrusion 1411. This is to increases a coupling force between the rotor tooth 1410 and the first member 1430. Accordingly, this is a structure for preventing the rotor tooth 1410 from being separated from the first member 1430 in the radial direction. When viewed in an axial direction, the 1-1 protrusion 1411 and the 1-2 protrusion 1412 may be formed in quadrangular shapes. As illustrated in. FIG. 13, the first protrusions 1411 and 1412 may be formed in a "T" shape.

The rotor tooth 1410 may include third protrusions 1413. The third protrusions 1413 may be disposed at an outer side the rotor tooth 1410 and disposed to protrude further than the side surfaces 1414. The third protrusions 1413 restrict an outer surface of the magnet 1420 in the radial direction to prevent the magnet 1420 from being separated from the rotor tooth 1410 in the radial direction. However, when the first can 440 and the second can 450 according to the first embodiment are applied, the third protrusions 1413 may be removed.

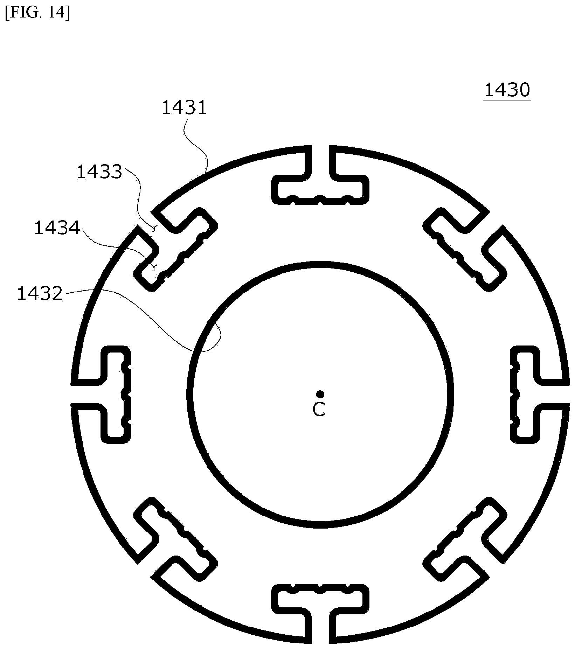

FIG. 14 is a plan view illustrating the first member 1430.

The first member 1430 of FIG. 14 is a member to be connected to the rotor tooth 1410 and the shaft 500. Particularly, the first member 1430 is formed of a non-magnetic material such as a resin to prevent a magnetic flux from leaking to the shaft through the rotor tooth 1410.

The first member 1430 may be a hollow member. The first member 1430 may include an outer circumferential surface 1431, an inner circumferential surface 1432, a first grooves 1433, and second grooves 1434. The outer circumferential surface 1431 is in contact with the magnet 1420. The inner circumferential surface 1432 may be in contact with the shaft 500. The first grooves 1433 and the second grooves 1434 are for coupling between the rotor teeth 1410 and the first member 1430. The first grooves 1433 and the second grooves 1434 are positioned between the outer circumferential surface 1431 and the inner circumferential surface 1432 in the radial direction.

The first grooves 1433 and the second grooves 1434 are disposed to communicate with each other. The first grooves 1433 are formed inward from the outer circumferential surface 1431, and the second grooves 1434 is disposed inward from the first grooves 1433. For example, the second grooves 1434 may be formed inside the first grooves 1433 to communicate with the first grooves 1433.

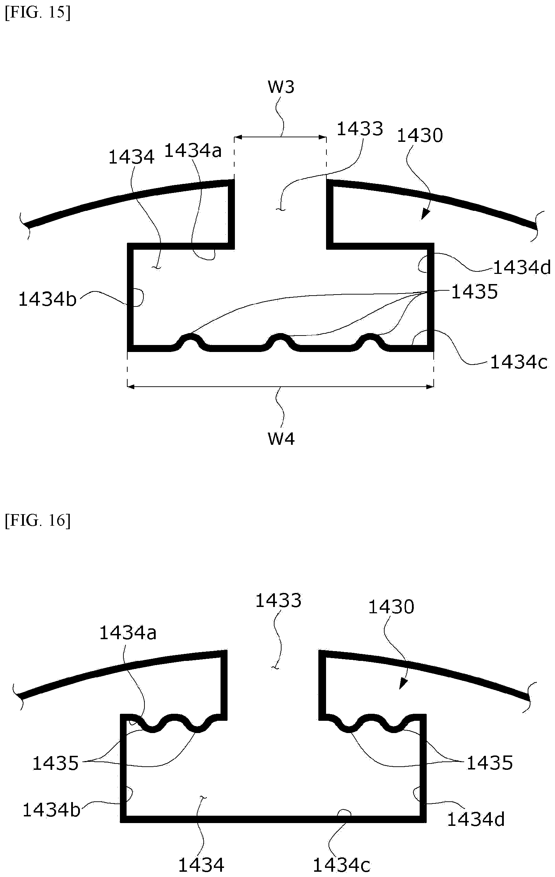

FIG. 15 is a plan view illustrating the first groove 1433 and the second groove 1434 of the first member 1430.

Referring to FIG. 15, the second groove 1434 may be disposed further inward than the first groove 1433. A width W4 of the second groove 1434 may be greater than a width W3 of the first groove 1433. This is a structure for preventing the rotor tooth 1410 from being separated from the first member 1430 in the radial direction while increasing a coupling force between the rotor tooth 1410 and the first member 1430. In this case, the width W3 of the first groove 1433 and the width W4 of the second groove 1434 are widths in consideration of sizes of the first protrusions 1411 and 1412 of the rotor tooth 1410 and second protrusions 1435.

When the rotor tooth 1410 is installed in the first member 1430, the first protrusions 1411 and 1412 are positioned in the first groove 1433, and the second protrusions 1435 are disposed in the second groove 1434. When viewed in the axial direction, the first groove 1433 and the second groove 1434 may be formed in quadrangular shapes.

The second groove 1434 may include first surfaces 1434a and 1434b and second surfaces 1434c and 1434d disposed in opposite directions.

The first surfaces 1434a and 1434b may include a 1-1 surface 1434a and a 1-2 surface 1434b adjacent to each other. In addition, the second surfaces 1434c and 1434d may include a 2-1 surface 1434c and a 2-2 surface 1434d adjacent to each other. The 1-1 surface 1434a and the 2-1 surface 1434c are disposed to face each other. The 1-2 surface 1434b and the 2-2 surface 1434d are disposed to face each other. The 1-1 surface 1434a is connected to the first groove 1433. The 1-2 surface 1434b may be connected to the 2-1 surface 1434c. The 2-2 surface 1434d may be connected to the 1-1 surface 1434a.

The plurality of second protrusions 1435 are disposed on the 2-1 surface 1434c. The second protrusions 1435 are in contact with the 1-2 protrusion 1412 inserted into the second groove 1434. The second protrusions 1435 may include curved surfaces. Curved portions of the second protrusions 1435 may be in contact with the 1-2 protrusion 1412 of the rotor tooth 1410. For example, the 1-2 protrusion 1412 may be in line contact with the second surfaces 1434c and 1434d through the curved portions of the second protrusions 1435 in the axial direction. When the rotor tooth 1410 is coupled to the first member 1430, The first protrusions 1411 and 1412 are inserted along the first groove 1433 and the second groove 1434 in the axial direction. In this case, an inner surface of the 1-2 protrusion 1412 of the rotor tooth 1410 is in contact with the second protrusions 1435 disposed in the second groove 1434, and on outer surface of the 1-2 protrusion 1412 may be in surface contact with the 1-1 surface 1434a of the second groove 1434.

FIG. 16 is a view illustrating a modified example of a second groove 1434 of a first member 1430.

Referring to FIG. 16, a plurality of second protrusions 1435 may be disposed only on a 1-1 surface 1434a. First protrusions 1411 and 1412 are inserted along a first groove 1433 and the second groove 1434 in an axial direction, an outer surface of a 1-2 protrusion 1412 of rotor tooth 1410 may be in contact with the second protrusions 1435 disposed in the second groove 1434, and an inner surface of the 1-2 protrusion 1412 may be in surface contact with a 2-1 surface 1434c of the second groove 1434.

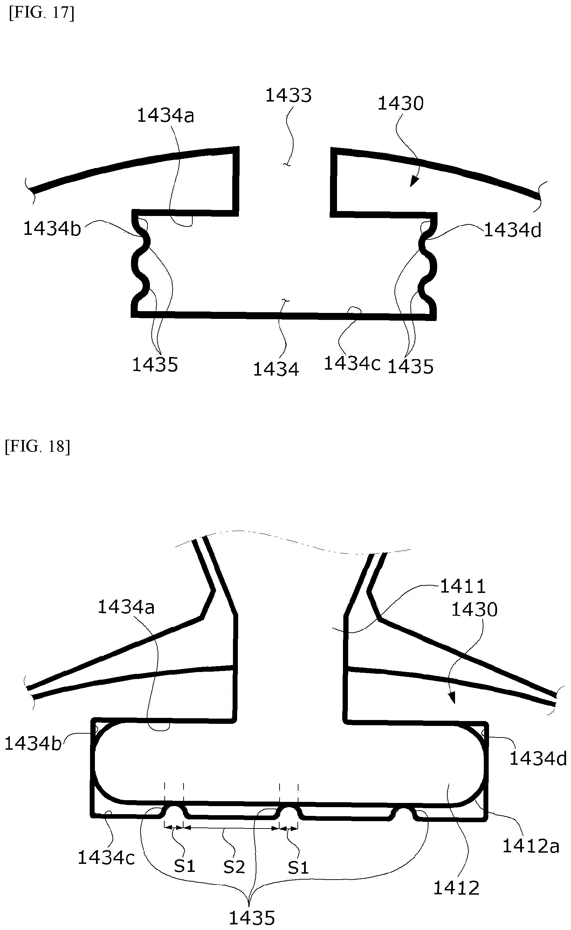

FIG. 17 is a view illustrating anther modified example of a second groove 1434 f a first member 1430.

Referring to FIG. 17, a plurality of second protrusions 1435 may be disposed on a 1-2 surface 1434b and a 2-2 surface 1434d. When first protrusions 1411 and 1412 are inserted along a first groove 1433 and a second groove 1434 in an axial direction, a side surface of the 1-2 protrusion 1412 of a rotor tooth 1410 may be in contact with the second protrusions 1435 disposed in the second groove 1434, and an outer surface of the 1-2 protrusion 1412 may be in surface contact with a 1-1 surface 1434a of the second groove 1434, and an inner surface of the 1-2 protrusion 1412 may be in surface contact with a 2-1 surface 1434c of the second groove 1434.

FIG. 18 is a view illustrating a state in which the first protrusions 1411 and 1423 of the rotor tooth is coupled to the first groove 1433 and the second groove 1434 of the first member 1430

Referring to FIG. 18, when the rotor tooth 1410 is coupled to the first member 1430, and when the first protrusions 1411 and 1412 is inserted along the first groove 1433 and the second groove 1434 in the axial direction, inner surfaces of the first protrusions 1411 and 1412 form contact regions S1 with the 2-1 surface 1434c of the second groove 1434 and non-contact regions S2. The contact regions S1 are regions in which the second protrusions 1435 disposed on the 2-1 surface 1434c of the second groove 1434 are disposed, and the non-contact regions S2 are regions in which the second protrusions 1435 are not present. In the non-contact regions S2, spaces are formed between the first protrusions 1411 and 1412 of the rotor tooth 1410 and the second groove 1434 due to the second protrusions 1435. As illustrated in FIG. 18, since the 1-2 protrusion 1412 and the 2-1 surface 1434c are disposed apart from each other due to the second protrusions 1435, the spaces may be formed between the 1-2 protrusion 1412 and the 2-1 surface 1434c due to the second protrusions 1435. In this case, the contact regions S1 may be referred to as first regions, and the non-contact regions S2 may be referred to as second regions.

Due to the spaces, the 1-2 protrusion 1412 of the rotor tooth 1410 is easily inserted into the second groove 1434. In addition. In a state in which outer surfaces and side surfaces of the first protrusions 1411 and 1412 are in surface contact with the 1-1 surface 1434a, the 1-2 surface 1434b, and the 2-2 surface 1434d, since the second protrusions 1435 press the 1-2 protrusion 1412 of the rotor tooth 1410, there is an advantage of preventing the rotor tooth 1410 from being shaken. In addition, in a state in which the rotor tooth 1410 is coupled to the first member 1430, the plurality of second protrusions 1435 has an advantage of preventing the rotor tooth 1410 from being shaken due to a gap between the second groove 1434 and the 1-2 protrusion 1412.

When viewed in the axial direction, corner portions 1412a of the 1-2 protrusion 1412 of the rotor tooth 1410 may be formed in round shapes. The round shape may induce the 1-2 protrusion 1412 of the rotor tooth 1410 to be easily inserted into the second groove 1434. In a state in which the rotor tooth 1410 is inserted into the first member 1430, the second protrusions 1435 prevent the rotor tooth 1410 from being shaken.

Since the first protrusions 1411 and 1412 of the rotor tooth 1410 are disposed in the first groove 1433 and the second groove 1434, the first protrusions 1411 and 1412 and the first member 1430 form an overlap region in the circumferential direction. Since the width W2 of the 1-2 protrusion 1412 of the rotor tooth 1410 is greater than the width W3 of the first groove 1433, the rotor tooth 1410 is prevented from being escaped from the first member 1430 in the radial direction.

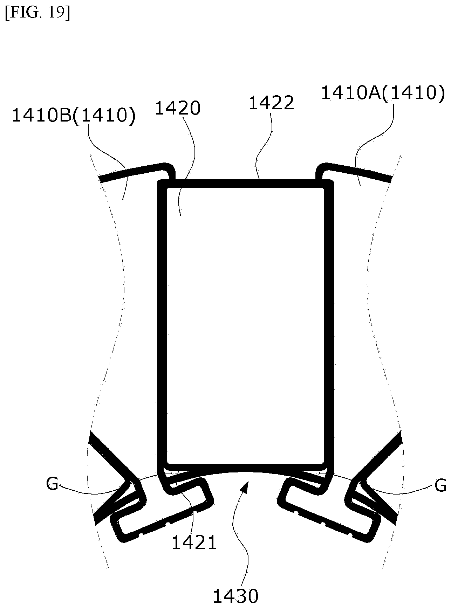

FIG. 19 is a view illustrating a state in which the magnet 1420 and the first member 1430 are in contact with each other.

Referring to FIG. 19, an inner surface 1421 of the magnet 1420 is in contact with the outer circumferential surface 1431 of the first member 1430. In this case, the inner surface of the magnet 1420 is a surface facing the shaft 500. Since a part of the inner surface 1421 of the magnet 1420 is in contact with the outer circumferential surface 1431 of the first member 1430, spaces "G" as in FIG. 19 may be formed. Accordingly, the other part of the inner surface of the magnet 1420 may be disposed apart from the outer circumferential surface 1431 of the first member 1430. For example, the inner surface of the magnet 1420 may be in line contact with the outer circumferential surface 1431 of the first member 1430. Accordingly, there is an advantage of improving a coupling force and assemblability of the magnet 1420.

An outer surface 1422 of the magnet 1420 may be fixed by the third protrusions 1413 of the rotor tooth 1410. In this case, the outer surface 1422 of the magnet 1420 is a surface facing the stator 300. For example, each of the third protrusions 1413 may support a part of the outer surface 1422 of the magnet 1420 to prevent the magnet 1420 from being separated.

In this case, an example of the rotor 1400 in which the third protrusions 1413 are formed on the rotor tooth 1410 is described, but the present invention is not necessarily limited thereto. For example, when the first can 440 and the second can 450 according to the first embodiment are applied to the rotor 1400, the third protrusions 1413 may be removed from the rotor tooth 1410. That is, even when the third protrusions 1413 are not formed on the rotor 1400, due to the first can 440 and the second can 450 which are coupled to the rotor 1400, the magnet 1420 can be prevented from being separated.

While the present invention has been described above with reference to exemplary embodiments, it may be understood by those skilled in the art that various modifications and changes of the present invention may be made within a range not departing from the spirit and scope of the present invention defined by the appended claims.

### [Reference Numerals]

| | | | |
|---|---|---|---|
| 1: | MOTOR | 100: | HOUSING |
| 200: | COVER | 300: | STATOR |
| 400, 1400: | ROTOR | 500: | SHAFT |
| 600: | BUSBAR | 700: | SENSOR PART |

## Claims

1. A motor comprising:
a stator;
a rotor disposed to correspond to the stator; and
a shaft coupled to the rotor,
wherein the rotor includes a rotor core including a yoke and a plurality of rotor teeth disposed apart from each other on the yoke in a circumferential direction, a plurality of magnets disposed between the rotor teeth, and a can disposed on the rotor core,
the can includes a first can in which a hole is formed and a second can including a protruding part coupled to the hole, and
a part of the protruding part is disposed to face an outer surface of each of the magnets.

2. The motor of claim 1, wherein a radius (R1) of an outer surface of each of the rotor teeth is greater than a distance from an outer surface of the protruding part to an axial center of the shaft.

3. The motor of claim 2, wherein an outer radius (R3) of the first can is smaller than or equal to the radius (R1) of the rotor tooth and greater than a distance from the axial center of the shaft to the outer surface of the magnet.

4. The motor of Claim 2, wherein:
the first can is formed in a ring shape; and
a distance from the axial center of the shaft to the outer surface of the magnet is smaller than an outer radius (R3) of the first can and greater than an inner radius (R4) of the first can.

5. The motor of claim 2, wherein:
the first can is formed in a ring shape; and
the first can is disposed to overlap a part of the magnet in an axial direction.

6. The motor of claim 1, wherein:
the stator includes a stator core and a coil wound around the stator core;
the stator core includes a plurality of teeth disposed apart from each other in the circumferential direction; and
a distance (D1) from an inner circumferential surface of each of the teeth to an outer surface of the rotor tooth is smaller than a distance (D2) from the inner circumferential surface of the tooth to an outer surface of the protruding part.

7. The motor of claim 1, wherein:
the protruding part is formed to be longer than a length the rotor core in an axial direction; and
an end portion of the protruding part coupled to the hole is bent.

8. The motor of claim 1, wherein:
the yoke includes an outer circumferential surface in contact with the magnet, an inner circumferential surface in contact with the shaft, and a first groove and a second groove which are disposed between the outer circumferential surface and the inner circumferential surface in the radial direction;
the yoke is formed of a non-magnetic material which is different from a material of the rotor tooth;
the second groove is disposed to be closer to the inner circumferential surface than the first groove in the radial direction;
a width of the second groove in the circumferential direction is greater than a width of the first groove in the circumferential direction; and
a part of the rotor tooth is disposed in the first groove and the second groove.

9. A motor comprising:
a shaft;
a rotor disposed outside the shaft; and
a stator disposed outside the rotor,
wherein the rotor includes a plurality of rotor teeth, a magnet disposed between the plurality of rotor teeth in a circumferential direction, and a first member disposed between the shaft and the rotor teeth in a radial direction,
the first member is formed of a non-magnetic material, and
a part of each of the rotor teeth and a part of the first member are disposed to overlap in the circumferential direction.

10. A motor comprising:
a shaft;
a rotor disposed outside the shaft; and
a stator disposed outside the rotor,
wherein the rotor includes a rotor tooth, a magnet in contact with the rotor tooth, and a first member disposed between the shaft and the rotor tooth in a radial direction and formed of a not-magnetic material,
the first member includes an outer circumferential surface in contact with the magnet, an inner circumferential surface in contact with the shaft, and a first groove and a second groove which are disposed between the outer circumferential surface and the inner circumferential surface in the radial direction and communicate with each other,
the second groove is disposed to be closer to the inner circumferential surface than the first groove in the radial direction,
a width of the second groove in a circumferential direction is greater than a width of the first groove in the circumferential direction, and
a part of the rotor tooth is disposed in the first groove and the second groove.

11. The motor of claim 9, wherein:
the first member includes a first groove and a second groove which communicate with each other;
the second groove is disposed to be closer to an inner circumferential surface of the first member than the first groove in the radial direction;
a width of the second groove in the circumferential direction is greater than a width of the first groove in the circumferential direction; and
a part of the rotor tooth is disposed in the first groove and the second groove.

12. The motor of claim 10 or 11, wherein:
the rotor tooth includes a first protrusion protruding toward the shaft;
the second groove includes a first surface and a second surface disposed in opposite directions; and
at least any one of the first surface and the second surface is in contact with the first protrusion in an axial direction.

13. The motor of claim 10 or 11, wherein:
the rotor tooth includes a first protrusion protruding toward the shaft;
the second groove includes a first surface and a second surface disposed in opposite directions in the radial direction; and
at least any one of the first surface and the second surface includes a first region in contact with the first protrusion and a second region which is not in contact with the first protrusion.

14. The motor of claim 10 or 11, wherein:
the second groove includes a first surface and a second surface disposed in opposite directions; and
at least any one of the first surface and the second surface includes a plurality of second protrusions.

15. The motor of claim 14, wherein:
the rotor tooth includes a first protrusion protruding toward the shaft;
a part of the first protrusion is in contact with the second protrusions disposed on the second surface; and
another part of the first protrusion is in surface contact with the first surface.

16. The motor of claim 10 or 11, wherein:
an inner surface of a plurality of surfaces of the magnet is disposed toward the shaft;
a part of the inner surface is in contact with an outer circumferential surface of the first member; and
the other part of the inner surface is disposed apart from the outer circumferential surface of the first member.

17. The motor of claim 10 or 11, wherein the magnet and the first member are in line contact with each other in an axial direction.

18. The motor of claim 10 or 11, wherein:
the rotor tooth includes a first protrusion protruding toward the shaft;
the first protrusion includes a 1-1 protrusion and a 1-2 protrusion protruding from the 1-1 protrusion; and
a width of the 1-2 protrusion in the circumferential direction is greater than a width of the 1-1 protrusion in the circumferential direction.

19. The motor of claim 10 or 11, further comprising a can disposed on the rotor tooth to which the magnet is coupled,
wherein the can includes a first can in which a hole is formed and a second can including a protruding part coupled to the hole, and
a part of the protruding part is disposed to face an outer surface of the magnet.

20. The motor of claim 19, wherein a radius (R1) of an outer surface of the rotor tooth is greater than a distance from an outer surface of the protruding part to an axial center of the shaft.
